# EUROPEAN PATENT SPECIFICATION

(11) **EP 3 632 660 B1**
(45) Date of publication and mention of the grant of the patent: **17.11.2021**
(21) Application number: 19199425.0
(22) Date of filing: 25.09.2019
(51) Int. Cl.: B29C 65/18, B29C 65/30, B29C 65/56, B29C 65/74, B29C 65/78, B65B 25/00, B65B 9/073, B65B 51/30, B65B 65/00

(54) **ANGLED OR CURVED JAWS AND METHOD FOR WRAPPING ICE CREAM**
ABGEWINKELTE ODER GEKRÜMMTE BACKEN UND VERFAHREN ZUM UMHÜLLEN VON SPEISEEIS
MÂCHOIRES INCURVÉES OU AVEC UN ANGLE POUR EMBALLAGE DE CRÈME GLACÉEET PROCÉDÉ D'EMBALLAGE DE CRÈME GLACÉE

(30) Priority: 03.10.2018 EP 18198393
(43) Date of publication of application: 08.04.2020
(73) Proprietor: Tetra Laval Holdings & Finance S.A., 1009 Pully (CH)
(72) Inventor: KJERULF, Søren, 8400 Ebeltoft (DK); TEINBY, Benjamin Nicky, 8260 Viby (DK)
(74) Representative: Tetra Pak - Patent Attorneys SE

(56) References cited:
- EP-A1- 2 311 735
- WO-A2-2014/079457
- DE-A1-102005 034 284
- JP-A- H0 885 505
- JP-A- 2009 149 365
- US-A- 2 966 021
- US-A1- 2002 152 719
- US-A1- 2017 152 064
- US-B2- 9 452 853

## Description

### Technical Field

The invention relates to a method and system for receiving a wrapping material and an ice cream product to produce wrapped ice cream products, where a pair of sealing jaws are arranged to engage and seal the wrapping material.

### Technical Background

Food products, such as ice cream products, are often automatically packaged using a conveyor-type packaging line. In many solutions, each ice cream product is moved along a conveyor line, or belt, for enclosing the ice cream product inside a wrapping material, sealing the wrapping material, and cutting the wrapping material to produce individually wrapped ice cream products. Multiple products may be placed on the conveyor and arranged in ordered columns and rows to be received for packaging by downstream packaging machines.

Some current packaging machines use horizontal box-motion wrapping machines. The machines include continuously driven sealing jaws that are moveable toward each other to engage, seal, and cut the wrapping material in between individual ice cream products that are located inside a length of wrapping material. Current sealing jaws successfully accomplish sealing of wrapping materials around ice cream products. However, in some cases the appearance as well as the quality and thus the integrity of the sealed wrapping material differ in an undesirable way.

Relevant prior art is reflected by patent documents JPH0885505A, US9452853B2 and WO2014/079457A2.

### Summary of the Invention

It is an object of the invention to at least partly overcome one or more limitations of the prior art. In particular, it is an object to provide sealing jaws that are configured to produce a more consistent final seal and cut of the wrapping material enclosing the ice cream products.

According to an aspect of the invention, a packaging machine is provided according to claim 1, having sealing jaws that are moveable towards each other to engage and seal the wrapping material to enclose an ice cream product inside the wrapping material.

The sealing jaws described herein are advantageous in that the jaws are curved or angled relative to the direction of travel of the wrapping material and the ice cream products. The curved or angled surfaces of the sealing jaws are complementary in shape to each other such that the sealing jaws stretch the wrapping material when the sealing jaws are moved toward each other to engage the wrapping material. The stretched material enables improved contact between the sealing jaws and the wrapping material during sealing. In case of heat sealing, more energy-efficient operating sealing temperatures of the packaging machine is enabled.

The angled surface of the first sealing jaw may have a concave shape and the angled surface of the second sealing jaw has a convex shape.

The first sealing jaw and the second sealing jaw may engage the wrapping material along an entire width of both the first sealing jaw and the second sealing jaw.

The first sealing jaw and the second sealing jaw may either be heated for heat-sealing the wrapping material, or may be arranged for cold-sealing the wrapping material.

The angled or curved surface of the first sealing jaw and the angled or curved surface of the second sealing jaw may each have ridges that are complementary in shape to each other.

The ridges may extend along an entire width of the first sealing jaw and the second sealing jaw.

At least one of the first and the second sealing jaws may be moveable by a pneumatic cylinder.

The packaging machine may include a cutting tool that is arranged in the first sealing jaw and is actuatable to cut the wrapping material when the sealing jaws have been moved towards each other and fix the wrapping material to engage and seal the wrapping material.

The angled or curved surface of the first sealing jaw may be formed of two surfaces that are arranged at a distance from each other and angled or curved concavely toward the cutting tool.

The angled or curved surface of the second sealing jaw may be formed of two surfaces that are arranged at a distance from each other to define a slot therebetween for receiving the cutting tool, the two surfaces of the second sealing jaw being angled or curved convexly toward the first sealing jaw.

The packaging machine may include a housing from which the second sealing jaw protrudes and an electrical wire assembly that is connected between a heat source and the housing.

The angled or curved surfaces of the sealing jaws are angled or curved such that they stretches the wrapping material by a distance of at least 1.0 millimeter relative to the predetermined direction, when the sealing jaws are moved toward each other to engage and seal the wrapping material.

The angled or curved surfaces of the sealing jaws may stretch a length of the wrapping material by an amount that is between 1% and 30% percent.

According to another aspect of the invention, a method of producing wrapped ice cream products according to claim 13.

The method of producing wrapped ice cream products may include any features described in connection with the packaging machine, and vice versa, and shares the same advantages.

Although various aspects of the invention are set out in the accompanying independent claims, other aspects of the invention may include any combination of features from the described embodiments and/or the accompanying dependent claims with the features of the independent claims, and not only the combinations explicitly set out in the accompanying claims.

### Brief Description of the Drawings

Embodiments of the invention will now be described, by way of example, with reference to the accompanying schematic drawings, where:
Fig. 1 is a perspective view of a packaging machine for packaging ice cream products according to an embodiment of the present invention.
Fig. 2 is a side view of the packaging machine shown in Fig. 1.
Fig. 3 is a perspective view of a sealing and cutting device of the packaging machine shown in Fig. 1 according to an embodiment of the present invention when the device is in an open position.
Fig. 4 is a side view of the device shown in Fig. 3.
Fig. 5 is a front view of the device shown in Fig. 3.
Fig. 6 is a perspective view of the device shown in Fig. 3 when the wrapping device is in a closed position to engage a wrapping material.
Fig. 7 is a side view of the device shown in Fig. 6.
Fig. 8 is a detailed side view of a first sealing jaw of the device shown in Fig. 3.
Fig. 9 is a detailed side view of the ridges of the first sealing jaw shown in Fig. 8.
Fig. 10 is a detailed side view of a second sealing jaw of the wrapping device shown in Fig. 3.
Fig. 11 is a detailed side view of the ridges of the second sealing jaw shown in Fig. 10.
Fig. 12 is a side view of a sealing and cutting device according to another embodiment of the present invention.
Fig. 13 is a side view of a sealing and cutting device according to another embodiment of the present invention.
Fig. 14 is a side view of a sealing and cutting device according to another embodiment, not forming part of the present invention.
Fig. 15 is a flow chart of a method of producing wrapped ice cream products using a packaging machine.
Fig. 16 is a schematic view showing a stretching of the wrapping material.

### Detailed Description of Embodiments

The method and system according to the present invention has particular application in a packaging machine for producing wrapped ice cream products, such as ice cream bars having a stick, ice cream having a cone or ice cream sandwiches. Packaging machines for other frozen ice cream products, such as stick novelties, bar products, cakes, or candy bars may also be suitable applications. The method and system use sealing jaws having curved or angled surfaces that are moveable toward each other to engage and stretch the wrapping material over the curved or angled surfaces, and seal the stretched portion of the wrapping material to enclose the ice cream product. Stretching the wrapping material enables better contact between the sealing jaws and the wrapping material which enables the packaging machine to operate at more energy-efficient sealing temperatures, such as lower heating temperatures when heat-sealing the wrapping material. Additionally, using the angled or curved sealing jaws provides wrapped ice cream products that have wrapping material with curved or angled cut edges, in contrast to the wrapped products having wrapping material with straight cut edges as produced by conventional packaging machines and processes.

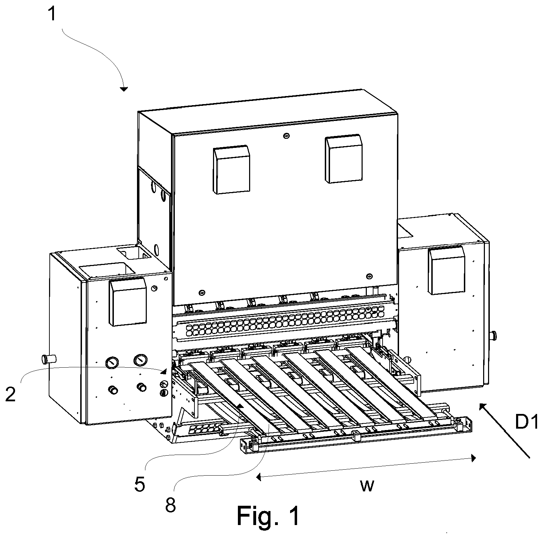

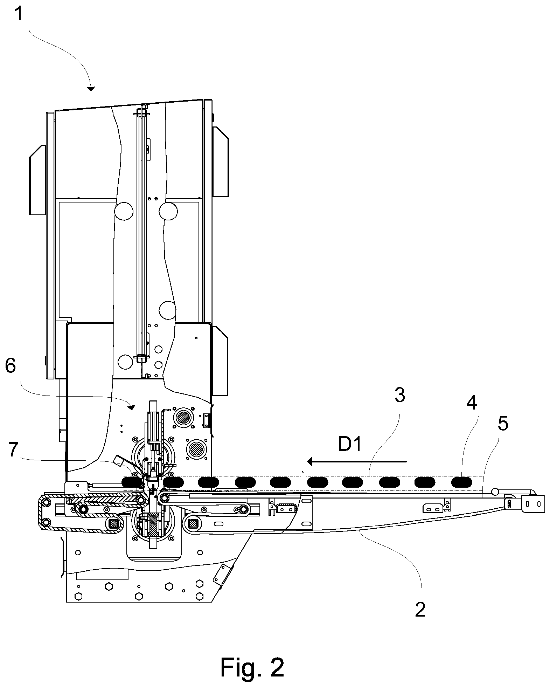

Referring first to Figs. 1 and 2, an exemplary packaging machine 1 for producing wrapped ice cream products is shown. The packaging machine 1 includes an infeed mechanism 2 that feeds a wrapping material 3 and an ice cream product 4 in a predetermined direction D1 relative to the packaging machine 1 for sealing and wrapping. The wrapping material 3 may be any suitable material, such as a plastic material or foil material, and layers of wrapping material 3 are arranged under and over each ice cream product 4 as a single elongated sheet that forms a tube in which the ice cream product 4 is located. The feeding of the wrapping material 3 and forming it into a tube in which the ice cream product 4 is located is accomplished by using conventional techniques and principles. The infeed mechanism 2 includes a conveyor line 5 and operates in a known manner. The wrapping material 3 and ice cream product 4 are moved in the predetermined direction D1 through a sealing and cutting device 6 of the packaging machine 1 such that each ice cream product 4 is sealed and enclosed in the wrapping material 3 to form an individual, wrapped ice cream product 7, as shown in Fig. 2. The sealing and cutting device 6 is configured for box-motion such that the sealing and cutting device 6 moves continuously between each ice cream product 4 to seal and cut the wrapping material 3. As best shown in Fig. 1, the conveyor line 5 of the infeed mechanism 2 may have a plurality of lanes 8 arranged along a width w of the conveyor line 5 and each lane 8 may contain a plurality of ice cream products. The width w of the conveyor line 5 is perpendicular to the predetermined direction D1.

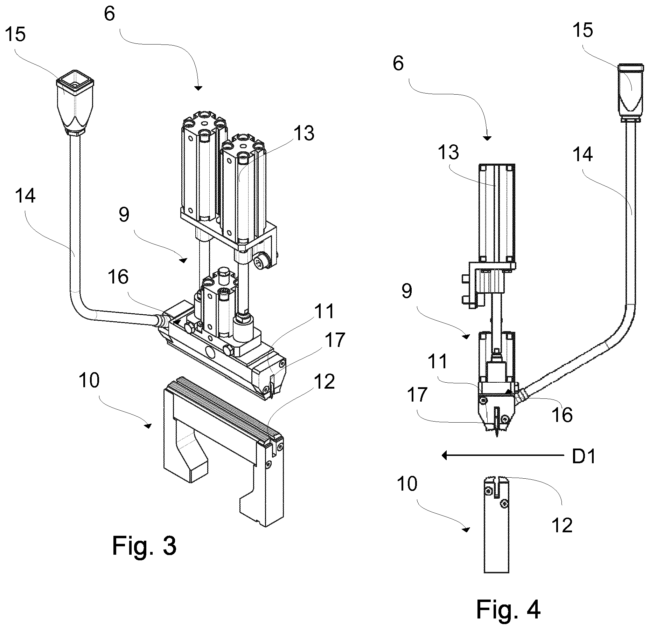

Referring in addition to Figs. 3-7, the sealing and cutting device 6 of the packaging machine 1 is shown. The sealing and cutting device 6 is arranged along the width w of the conveyor line 5 and in a direction normal to the predetermined direction D1 in which the wrapping material 3 and the ice cream product 4 moves. The sealing and cutting device 6 includes a top moveable portion 9 that is arranged above the conveyor line 5 and a bottom moveable portion 10 that is arranged below the conveyor line 5, as schematically shown in Fig. 4. The top moveable portion 9 and the bottom moveable portion 10 are vertically aligned with each other. The top moveable portion 9 has a first sealing jaw 11 at a bottom end thereof and the bottom moveable portion 10 has a second sealing jaw 12 at a top end thereof. The sealing jaws 11, 12 may be removably attached to the moveable portions 9, 10 such that the sealing jaws 11, 12 may be removed for maintenance or replacement.

The first sealing jaw 11 and the second sealing jaw 12 are moveable toward each other, in a direction perpendicular to the predetermined direction D1, to engage and seal the wrapping material 3 as the wrapping material 3 moves in the predetermined direction D1 between the sealing jaws 11, 12. As will be described in further detail below, the sealing jaws 11, 12 have angled or curved surfaces such that the engagement of the sealing jaws 11, 12 with the wrapping material 3 fixes and stretches the wrapping material 3 over the angled or curved surfaces during sealing to produce an angled or curved cut edge of the wrapping material 3. The wrapping material 3 may, along its length in the direction D1 where it is in contact with the sealing jaws, be stretched slightly, such as, for example, by an amount of at least one percent of the original length of the wrapping material 3. In an exemplary embodiment, the wrapping material 3 may be stretched by an amount of at least three percent or at least eight percent. In still another exemplary embodiment, the wrapping material 3 may be stretched by an amount between five and twenty percent, or between five and thirty percent. Stretching the wrapping material 3 thins the area of the wrapping material 3 that is engaged by the sealing jaws 11, 12 enabling the sealing jaws 11, 12 to have improved contact with the wrapping material 3.

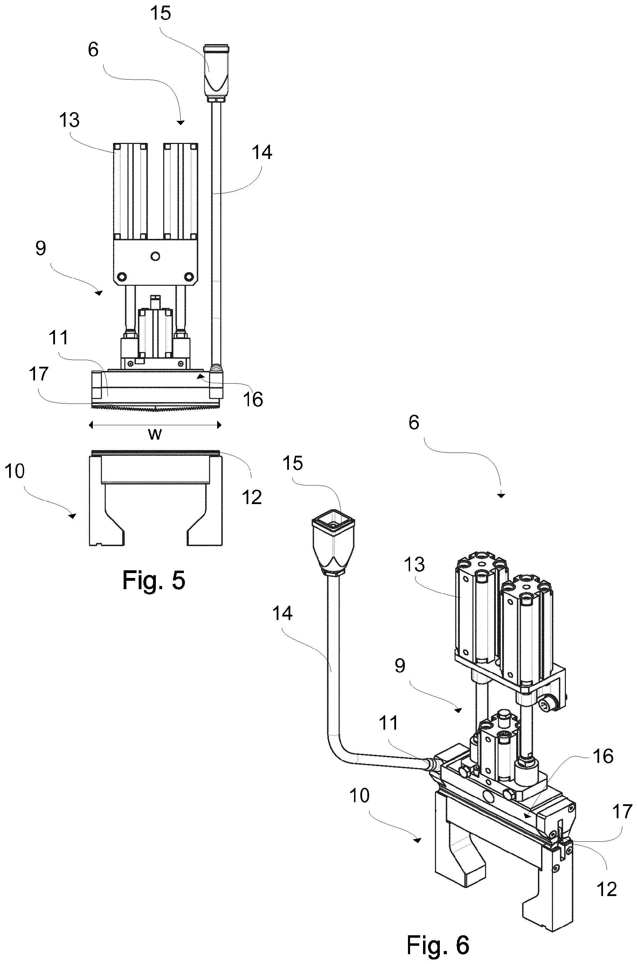

The first sealing jaw 11 and the second sealing jaw 12 are moveable between an open position in which the sealing jaws 11 and 12 are spaced from each other, as shown in Figs. 3 and 4, and a closed position in which the sealing jaws 11, 12 are moved toward each other to engage opposite sides of the wrapping material 3, as shown in Figs. 5 and 6. At least one or both of the sealing jaws 11, 12 may be spring-loaded for movement in the direction normal to the predetermined direction D1. The sealing jaws 11, 12 may be moved or driven using any suitable actuation mechanism. For example, as shown in Figs. 3-7, the sealing and cutting device 6 may include at least one pneumatic cylinder 13 that drives the first sealing jaw 11 upwardly and downwardly, such that the first sealing jaw has a spring-loaded type of movement. The second sealing jaw 12 may be moved similarly to the first sealing jaw 11.

When the sealing jaws 11, 12 are moved toward each other to engage the wrapping material 3, the sealing jaws 11, 12 seal the wrapping material 3 by either a heat sealing process or a cold sealing process. As shown in Figs. 3-7, in an exemplary embodiment in which the sealing jaws 11, 12 are heated for heat sealing, the first sealing jaw 11 includes an electrical wire assembly 14 that, via a connector 15, is connected between packaging machine 1 and a housing 16 of the first sealing jaw 11. The housing 16 includes a heat element for the first sealing jaw 11 and other heating components such as an insulator for retaining the heat and a temperature sensor to maintain a certain temperature of the first sealing jaw 11 during operation of the packaging machine 1. The temperature may be dependent on the material of the wrapping material 3 and in an exemplary embodiment in which the sealing jaws 11, 12 are heated for heat sealing the wrapping material 3, the temperature may be between 110 and 130 degrees Celsius.

The second sealing jaw 12 may have features that are similar to those of the first sealing jaw 11 for both movement and heating of the second sealing jaw 12. Additionally, the first sealing jaw 11 includes a cutting tool 17 that is arranged in the first sealing jaw 11 and is actuated to cut the wrapping material 3 when the sealing jaws 11 have been moved towards each other to fixedly engage and seal the wrapping material 3. Any suitable cutting tool 17 may be used, such as a knife or blade, and the cutting tool 17 may extend along the width w of the first sealing jaw 11 which is equivalent to the width of the conveyor line 5, as shown in Fig. 5. The cutting tool 17 is operated to move downwardly through the first sealing jaw 11 to cut the wrapping material 3 after the wrapping material 3 is sealed by engagement of the sealing jaws 11, 12.

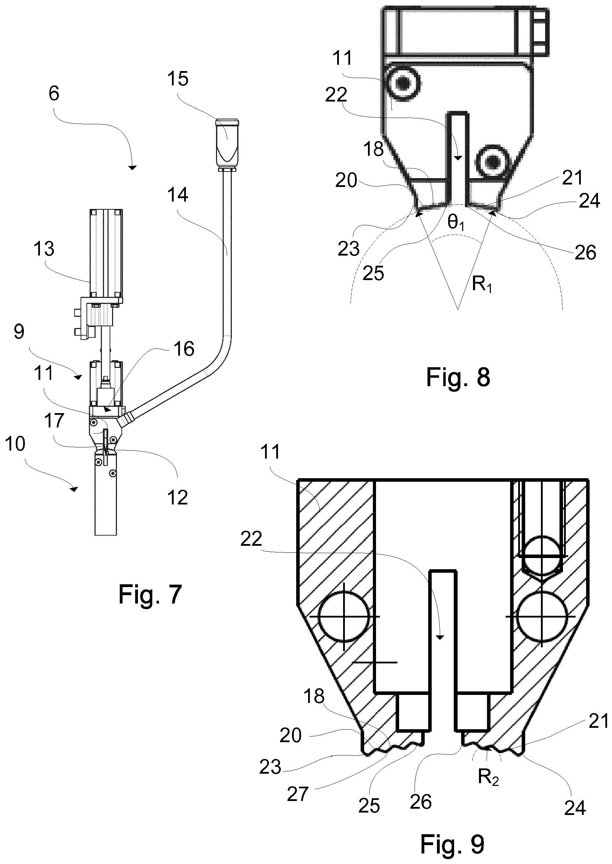

With further reference to Figs. 8-13, the sealing jaws 11, 12 have end surfaces 18, 19 that are advantageously angled or curved relative to the predetermined direction D1. The end surfaces 18, 19 may have a curved or straight concave shape, or a curved or straight convex shape. The end surfaces 18, 19 extend along the width w of the conveyor line 5 and in a direction perpendicular to the predetermined direction D1 in which the wrapping material 3 travels through the sealing jaws 11, 12. The end surface 18 of the first sealing jaw 11 is a bottom surface or the lowest surface of the first sealing jaw 11 nearest to the second sealing jaw 12. The end surface 19 of the second sealing jaw 12 is a top surface or the upper most surface of the second sealing jaw 12 nearest to the first sealing jaw 11. The end surfaces 18, 19 each have a shape or curvature that is complementary to the other end surface such that the end surfaces 18, 19 tightly fit together over opposing sides of the wrapping material 3.

As shown in Figs. 8-10, in an exemplary embodiment of the sealing jaws 11, 12, the end surfaces 18, 19 may be curved or arc-shaped. The first end surface 18 of the first sealing jaw 11 may have a downward curved concave shape and the second end surface 19 of the second sealing jaw 12 may have an upward curved convex shape such that the concave shape is received in the convex shape. In alternative embodiments, the first end surface may have a downward convex shape and the second end surface may have an upward concave shape. As shown in Figs. 8 and 9, the end surface 18 is formed of two adjacent surface portions 20, 21. A slot 22 is defined between the adjacent surface portions 20, 21 which mirror each other on opposite sides of the slot 22. The cutting tool 17 (shown in Figs. 3-7) may extend through the slot 22 to engage the wrapping material 3 such that the adjacent surface portions 20, 21 are curved concavely toward the cutting tool 17. The adjacent surface portions 20, 21 both have the same radius of curvature R₁, and outer ends 23, 24, and inner ends 25, 26 that are adjacent the slot 22. The outer ends 23, 24 are lower than the inner ends 25, 26, i.e. are located closer to the second sealing jaw 12.

In an exemplary embodiment, the horizontal distance between the outer ends 23, 24 may be between 20 and 22 millimeters and the horizontal distance between the inner ends 25, 26 may be between 5.1 and 5.3 millimeters. The distance between the inner ends 25, 26 may also define the length of the slot 22. The vertical distance between the inner ends 25, 26 and the outer ends 23, 24 may be between 1.25 and 1.27 millimeters. The vertical distance may be equivalent to a vertical distance that the wrapping material is stretched relative to the predetermined direction D1 when the sealing jaws 11, 12 engage the wrapping material. In other embodiments, the vertical distance and stretching of the wrapping material may be greater. The radius of curvature R₁ of the adjacent surface portions 20, 21 may be between 44 and 46 millimeters and the central angle Θ₁, between the outer ends 23, 24 may be between 25 and 30 degrees. The dimensions described herein are merely exemplary and the sealing jaws may be sized up or down depending on the application.

As best shown in Fig. 9, each of the two adjacent surface portions 20, 21 may further include a plurality of waves or ridges 27 that extend along the width of each adjacent surface portion 20, 21 and are arranged along the corresponding curved adjacent surface portion 20, 21. The ridges 27 may be arranged along the entire area of the two adjacent surface portions 20, 21 and formed of both concave and convex curvatures. The ridges 27 are symmetrical in shape and both the concave and convex curvatures have a radius of curvature R₂ in the predetermined direction D₁. In an exemplary embodiment, the radius of curvature R₂ of each ridge 27 may be between 0.4 and 0.6 millimeters. Each adjacent surface portion 20, 21 may have any suitable number of ridges, such as between three and five ridges. The ridges 27 may be used to provide additional features of the cut edges of the wrapped ice cream products, such as wavy edges.

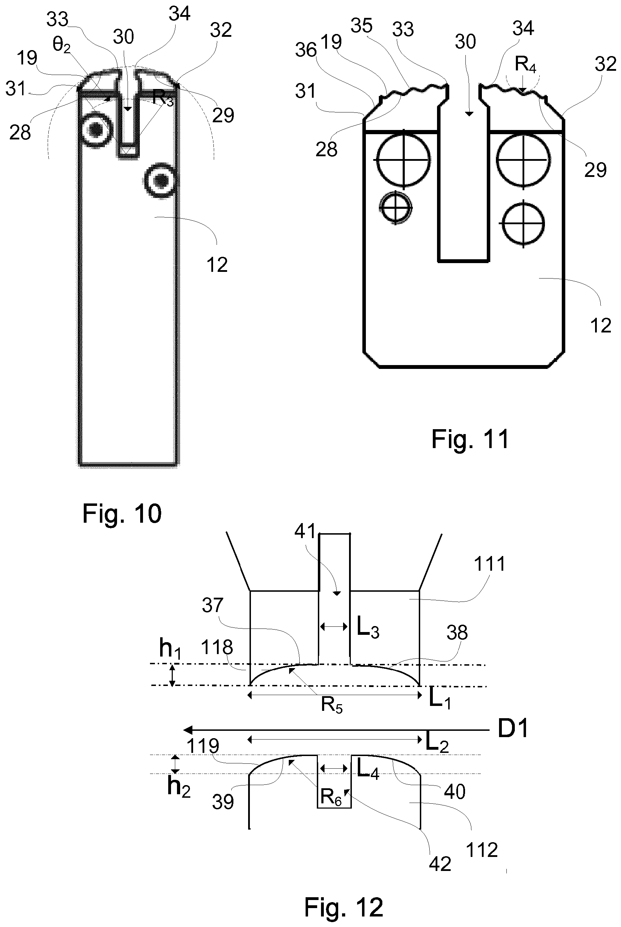

As shown in Figs. 10 and 11, the end surface 19 of the second sealing jaw 12 is formed of two adjacent portions 28, 29. A slot 30 is defined between the adjacent portions 28, 29 which mirror each other on opposite sides of the slot 30. The slot 30 receives the cutting tool 17 during operation. The adjacent surface portions 28, 29 both have the same radius of curvature R₃, which may correspond to the curvature R₁ shown in Fig. 8, and outer ends 31, 32, and inner ends 33, 34 that are adjacent the slot 30. The outer ends 31, 32 are lower than the inner ends 33, 34, i.e. are located closer to the first sealing jaw 11. In an exemplary embodiment, the horizontal distance between the outer ends 31, 32 may be between 24 and 26 millimeters, which is greater than the distance between the outer ends 23, 24 of the first sealing jaw 11. The horizontal distance between the inner ends 33, 34 may be between 4.1 and 4.3 millimeters, which may also be the length of the slot 30. The vertical distance between the inner ends 33, 34 and the outer ends 31, 32 may be between 2.38 and 2.40 millimeters. The radius of curvature R₃ of the adjacent surface portions 28, 29 may be between 33 and 35 millimeters and the central angle Θ₂ between the outer ends 31, 32 may be between 40 and 45 degrees. The central angle Θ₂ may be greater than the central angle Θ₁ of the outer ends 23, 24 of the first sealing jaw 11 such that the adjacent surface portions 20, 21 of the first sealing jaw 11 are complementary in shape with less than an entire surface area of the adjacent surface portions 28, 29 of the second sealing jaw 12. In other exemplary embodiments, the adjacent surface portions 20, 21 of the first sealing jaw 11 may be complementary in shape with the entire surface area of the adjacent surface portions 28, 29 of the second sealing jaw 12 such that the central angles Θ₁, Θ₂ would be approximately the same. The dimensions described herein are merely exemplary and the sealing jaws may be sized up or down depending on the application.

As best shown in Fig. 11, each of the two adjacent surface portions 28, 29 may further include a plurality of waves or ridges 35 that extend along the width of each adjacent surface portion 28, 29 and are arranged along the corresponding curved adjacent surface portion 28, 29. The ridges 35 may be symmetrical in shape and have convex and concave curvatures that each have a radius of curvature R₄ in the predetermined direction D₁. In an exemplary embodiment, the radius of curvature R4 may be between 0.4 and 0.6 millimeters. The radius of curvature R₄ corresponds to the radius of curvature R₂ of the ridges 27 of the first sealing jaw 11 such that the ridges 35 and ridged surface are complementary in shape relative to the ridges 27 of the first sealing jaw 11. Each adjacent surface portion 28, 29 may have any suitable number of ridges, such as between three and five ridges. In contrast to the first sealing jaw 11, the ridges 35 may not be arranged along the entire area of the adjacent surface portions 28, 29. As shown in Fig. 11, the adjacent surface portions 28, 29 may have an area 36 that is not ridged and does not engage the wrapping material 3. Thus, when the first sealing jaw 11 and the second sealing jaw 12 engage the wrapping material 3, the wrapping material 3 is stretched over the ridged surfaces of the sealing jaws 11, 12 during the sealing process.

Fig. 12 schematically shows another embodiment of the first sealing jaw 111 and the second sealing jaw 112 in which the end surfaces 118, 119 have adjacent surface portions 37, 38, 39, 40 that are similar to the aforementioned adjacent surface portions, but without ridges. The first end surface 118 has a downward concave curvature and the second end surface 119 has an upward convex curvature that is complementary in shape relative to the first end surface 118 such that the convex curvature is at least partially received in the concave curvature of the first sealing jaw 111. In an alternative embodiment, the first end surface may have a downward convex curvature and the second end surface may have an upward concave curvature that receives the downward convex curvature. The adjacent surface portions 37, 38 of the first sealing jaw 211 mirror each other opposite the slot 41 and the adjacent surface portions 39, 40 of the second sealing jaw 212 mirror each other opposite the slot 42. The adjacent surface portion 37 is complementary in shape to the adjacent surface portion 39 and the adjacent surface portion 38 is complementary in shape to the adjacent surface portion 40.

The end surfaces 118, 119 are complementary in shape relative to each other over the entire length L₁, L₂ of the end surfaces 118, 119. The height h₁ and outer length L₁ of the end surface 118 may be equal to the height h₂ and the outer length L₂ of the end surface 119. The inner lengths L₃, L₄ and the radii of curvature R₅ and R₆ of the end surfaces 118, 119, respectively, may also be equivalent to each other. In operation, the end surfaces 118, 119 move toward each other to engage, stretch the material over the end surfaces, and seal the wrapping material along the conveyor line moving in the predetermined direction D1. The heights h₁, h₂, may be equivalent to a distance that the wrapping material is vertically stretched in a direction normal to the predetermined direction D1 during the engagement of sealing jaws 111, 112. In an exemplary embodiment, the stretching may correspond to a distance of between 1.0 and 1.5 millimeters. In other embodiments, the distance may be greater.

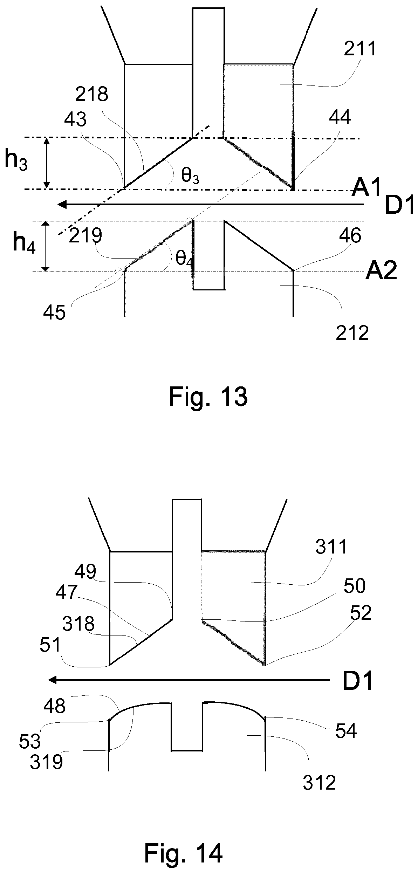

Fig. 13 schematically shows another embodiment of the first sealing jaw 211 and the second sealing jaw 212 in which the sealing jaws 211, 212 have end surfaces 218, 219 that are similar to the above described end surfaces, but are angled relative to the predetermined direction D1. The end surface 218 may have a straight concave shape and the end surface 219 may have a straight convex shape such that the convex shape of the second sealing jaw 212 is at least partially received in the concave shape of the first sealing jaw 211. The end surfaces 218, 219 may be complementary in shape to each other and the end surfaces 219, 219 may or may or may not include ridges as described above. The height h₃ of the end surface 218 may be equal to the height h₄ of the end surface 219. The inner and outer lengths in the direction D1 of the end surfaces may also be equivalent. In other embodiments, the lengths of the corresponding surfaces may be different such that only a portion of the surfaces are complementary in shape.

The first end surface 218 of the first sealing jaw 211 may be angled relative to the horizontal axis A1 of the outer ends 43, 44 by an angle Θ₃ and the second end surface 219 of the second sealing jaw 212 may be angled relative to the horizontal axis A2 of the outer ends 45, 46 by an angle Θ₄. The horizontal axes A1, A2 of the outer ends 43, 44, 45, 46 are parallel with the conveyor line traveling in the predetermined direction D1. The angles Θ₃, Θ₄ may be equal or nearly equal to each other and the angles may be between 15 and 25 degrees. Other angles may also be suitable. The amount of stretching of the wrapping material that occurs by engagement of the wrapping material between the sealing jaws 211, 212 will be proportional to the angle of the angled surfaces. For example, the wrapping material will be stretched more relative to the conveyor line when the angle is increased.

Fig. 14 schematically shows another embodiment of the first sealing jaw 311 and the second sealing jaw 312 in which the first end surface 318 of the first sealing jaw 311 is angled relative to the predetermined direction D1 and the second end surface 319 of the second sealing jaw 312 is curved relative to the predetermined direction D1. The embodiment of Fig. 14 does not fall within the scope of the present invention. The first end surface 318 may be angled as described above and the second end surface 319 may be curved as described above. The end surfaces 318, 319 may or may not have ridges and may engage the wrapping material along a portion of each end surface 318, 319. For example, a surface area of the linear adjacent surface portion 47 of the angled first end surface 318 and a corresponding arc length of the curved adjacent surface portion 48 of the second end surface 319 may move toward each other to engage the wrapping material 3 therebetween. As shown in Fig. 14, the first sealing jaw 311 is angled downwardly from the inner ends 49, 50 to the outer ends 51, 52 and the second sealing jaw 312 is curved convexly upwardly from the outer ends 53, 54. In other embodiments, the second sealing jaw may be angled upwardly from the inner ends to the outer ends. In still other embodiments, the first sealing jaw may be curved and the second sealing jaw may be angled. Thus, any combination of angled or curved surfaces that enable stretching of the wrapping material may be suitable for the sealing jaws. Still, the surfaces 318, 319 of the jaws 311, 312 are complementary in shape, since one of surfaces receives the other due to their concave respectively convex shape.

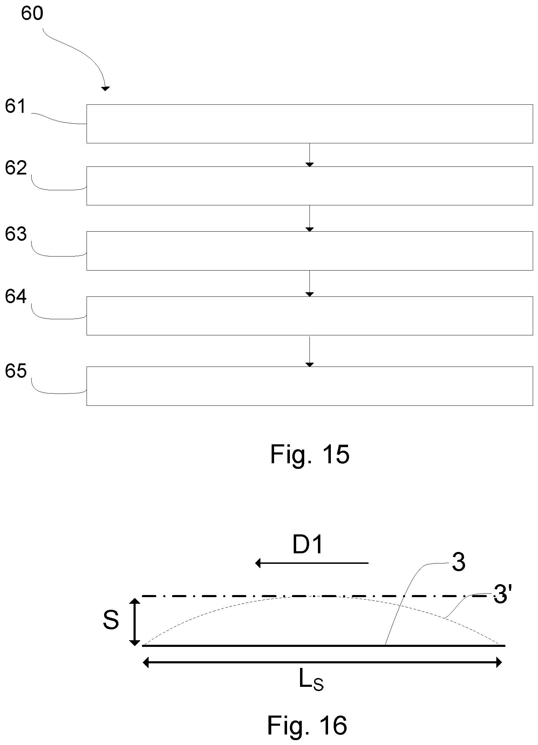

Referring now to Figs. 15 and 16, a method 60 of producing wrapped ice cream products 7 (as shown in Fig. 2) using the packaging machine 1 that receives the wrapping material 3 and the ice cream product 4 is schematically shown. The method 60 includes a step 61 of receiving the wrapping material 3 using the infeed mechanism 2 to move the wrapping material 3 and the ice cream product 4 in the predetermined direction D1 relative to and between the sealing jaws 11, 12 (as shown in Fig. 2). The method 60 further includes a step 62 of moving the sealing jaws 11, 12 toward each other to engage the wrapping material 3. Step 63 of the method includes stretching the wrapping material 3 by engaging the wrapping material 3 between the angled or curved surfaces of the sealing jaws 11, 12 to stretch the wrapping material 3 over the angled or curved surfaces. After the wrapping material 3 is engaged, step 64 of the method 60 includes heat sealing or cold sealing the wrapping material 3 to seal and enclose the ice cream product 4 and step 65 includes cutting the sealed wrapping material 3 using the cutting tool 17 to produce the wrapped ice cream product 7.

As shown schematically in Fig. 16, the wrapping material 3 is stretched downwardly, or upwardly in other embodiments, when the wrapping material 3 is engaged between the sealing jaws 11, 12. The wrapping material 3 is stretched by a distance S in a direction that is normal of the direction D1, which translates to a stretching or expansion in the length of the wrapping material 3 in the predetermined direction D1. Before stretching the wrapping material has the length illustrated by the solid line showing the unstretched wrapping material 3 in Fig. 16. After being stretched due to the angle or curvature of the surfaces of the sealing jaws, the wrapping material has the length illustrated by the dotted line showing the stretched wrapping material 3'. The difference in lengths between the dotted line and solid line represents the stretching of the wrapping material.

In an exemplary embodiment, the wrapping material 3 may be stretched such that the length L_{S} of the stretched wrapping material 3' is stretched to at least 101% of the original length of the wrapping material 3. In other exemplary embodiments, the length of the stretched wrapping material 3' may be at least 103% or at least 108% of the original length. In still other embodiments, the length of the stretched wrapping material 3' may be between 105% and 120% of the original length or between 105% and 130% of the original length. The amount of stretching of the wrapping material 3 is dependent on the amount of curvature of the angled or curved surfaces of the sealing jaws 11, 12. Stretching the wrapping material 3 is advantageous in that the stretching reduces wrinkles as well as slightly thins the area of the wrapping material 3 that is to be sealed, thereby enabling improved contact between the sealing jaws 11, 12 and the wrapping material 3 as compared with conventional sealing jaws. The improved contact enables more energy-efficient operating sealing temperatures and a more straight, homogenous sealing. In a heat sealing application, the operating temperature of the sealing jaws may be ten percent lower as compared with the operating temperature of conventional heat sealing applications.

## Claims

1. A packaging machine (1) configured to receive a wrapping material (3) and an ice cream product (4) to produce wrapped ice cream products (7), the packaging machine (1) comprising a first sealing jaw (11), a second sealing jaw (12) and an infeed mechanism (2) arranged to move the wrapping material (3) and the ice cream product (4) in a predetermined direction (D1) relative to and between the sealing jaws (11, 12), wherein the sealing jaws (11, 12) are moveable towards each other to engage and seal the wrapping material (3) to enclose the ice cream product (4) inside the wrapping material (3), wherein
the first sealing jaw (11) has a surface (18) that is angled or curved relative to the predetermined direction (D1); and
the second sealing jaw (12) has a surface (19) that is angled or curved relative to the predetermined direction (D1) and complementary in shape to the angled or curved surface (12) of the first sealing jaw (11), such that the sealing jaws (11, 12) stretch the wrapping material (3) over the angled or curved surfaces (18, 19) when the sealing jaws (11, 12) are moved toward each other to engage and seal the wrapping material (3), **characterized in that** the angled or curved surfaces (18, 19) of the sealing jaws (11, 12) are angled or curved such that they stretch the wrapping material (3) by a distance of at least 1.0 millimeter relative to the predetermined direction (D1), when the sealing jaws (11, 12) are moved toward each other to engage and seal the wrapping material (3).

2. The packaging machine (1) according to claim 1, wherein the angled or curved surface (18) of the first sealing jaw (11) has a concave shape and the angled or curved surface (19) of the second sealing jaw (12) has a convex shape.

3. The packaging machine (1) according to any preceding claim, wherein the first sealing jaw (11) and the second sealing jaw (11) engage the wrapping material (3) along an entire width (w) of both the first sealing jaw (11) and the second sealing jaw (12).

4. The packaging machine (1) according to any preceding claim, wherein the first sealing jaw (11) and the second sealing jaw (12) are one of:
heated for heat-sealing the wrapping material (3); or
arranged for cold-sealing the wrapping material (3).

5. The packaging machine (1) according to any preceding claim, wherein the angled or curved surface (18) of the first sealing jaw (11) and the angled or curved surface (19) of the second sealing jaw (12) each have ridges (27, 35) that are complementary in shape to each other.

6. The packaging machine (1) according to claim 5, wherein the ridges (27, 35) extend along an entire width (w) of the first sealing jaw (11) and the second sealing jaw (12).

7. The packaging machine (1) according to any preceding claim, wherein at least one of the first and the second sealing jaws (11, 12) is moveable by a pneumatic cylinder (13).

8. The packaging machine (1) according to any preceding claim, comprising a cutting tool (17) that is arranged in the first sealing jaw (11) and is actuatable to cut the wrapping material (3) when the sealing jaws (11, 12) have been moved towards each other and fix the wrapping material (3) to engage and seal the wrapping material (3).

9. The packaging machine (1) according to claim 8, wherein the angled or curved surface (18) of the first sealing jaw (11) comprises two surfaces (20, 21) that are arranged at a distance from each other and angled or curved concavely toward the cutting tool (17).

10. The packaging machine (1) according to claim 9, wherein the angled or curved surface (19) of the second sealing jaw (12) comprises two surfaces (28, 29) that are arranged at a distance from each other to define a slot (30) therebetween for receiving the cutting tool (17), the two surfaces (28, 29) of the second sealing jaw (12) being angled or curved convexly toward the first sealing jaw (11).

11. The packaging machine (1) according to any preceding claim, comprising a housing (16) from which the first sealing jaw (11) protrudes, and an electrical wire assembly (14) that is connected between a heat source (15) and the housing (16).

12. The packaging machine (1) according to any preceding claim, wherein the angled or curved surfaces (18, 19) of the sealing jaws (11, 12) stretch a length (Ls) of the wrapping material (3) by at least 1%, or by an amount that is between 1% and 30%.

13. A method (60) of producing wrapped ice cream products (7) using a packaging machine (1), the method comprising:
receiving (61) a wrapping material (3) and an ice cream product (4) using an infeed mechanism (2) arranged to move the wrapping material (3) and the ice cream product (4) in a predetermined direction (D1) relative to and between sealing jaws (11, 12,);
moving (62) the sealing jaws (11, 12) towards each other to engage and seal the wrapping material (3) to enclose the ice cream product (4) inside the wrapping material (3); **characterized by**
stretching (63) the wrapping material (3) over angled or curved surfaces (18, 19) of the sealing jaws (11, 12) that are angled or curved relative to the predetermined direction (D1), by a distance of at least 1.0 millimeter relative to the predetermined direction (D1), when the sealing jaws (11, 12) are moved toward each other to engage and seal the wrapping material (3), the angled or curved surfaces (18, 19) of the sealing jaws (11, 12) being complementary in shape relative to each other.

## Patentansprüche

1. Verpackungsmaschine (1), die dafür ausgelegt ist, ein Verpackungsmaterial (3) und ein Speiseeisprodukt (4) aufzunehmen, zum Herstellen von umhüllten Speiseeisprodukten (7), wobei die Verpackungsmaschine (1) eine erste Siegelbacke (11), eine zweite Siegelbacke (12) und einen Vorschubmechanismus (2) umfasst, der dazu angeordnet ist, das Verpackungsmaterial (3) und das Speiseeisprodukt (4) in einer vorbestimmten Richtung (D1) relativ zu und zwischen die Siegelbacken (11, 12) zu bewegen, wobei die Siegelbacken (11, 12) sich aufeinander zu bewegen können, zu dem Zweck, das Verpackungsmaterial (3) zu erfassen und zu versiegeln, um das Speiseeisprodukt (4) innerhalb des Verpackungsmaterials (3) einzuschließen, wobei
die erste Siegelbacke (11) eine Oberfläche (18) aufweist, die relativ zur vorbestimmten Richtung (D1) abgewinkelt oder gekrümmt ist; und
die zweite Siegelbacke (12) eine Oberfläche (19) aufweist, die relativ zur vorbestimmten Richtung (D1) abgewinkelt oder gekrümmt ist und in ihrer Form komplementär zur abgewinkelten oder gekrümmten Oberfläche (12) der ersten Siegelbacke (11) ist, derart, dass die Siegelbacken (11, 12) das Verpackungsmaterial (3) über die abgewinkelten oder gekrümmten Oberflächen (18, 19) dehnen, wenn die Siegelbacken (11, 12) aufeinander zu bewegt werden, um das Verpackungsmaterial (3) zu erfassen und zu versiegeln, **dadurch gekennzeichnet, dass** die abgewinkelten oder gekrümmten Oberflächen (18, 19) der Siegelbacken (11, 12) derart abgewinkelt oder gekrümmt sind, dass sie das Verpackungsmaterial (3) um einen Abstand von mindestens 1,0 Millimeter relativ zur vorbestimmten Richtung (D1) dehnen, wenn die Siegelbacken (11, 12) aufeinander zu bewegt werden, um das Verpackungsmaterial (3) zu erfassen und zu versiegeln.

2. Verpackungsmaschine (1) nach Anspruch 1, wobei die abgewinkelte oder gekrümmte Oberfläche (18) der ersten Siegelbacke (11) eine konkave Form und die abgewinkelte oder gekrümmte Oberfläche (19) der zweiten Siegelbacke (12) eine konvexe Form aufweist.

3. Verpackungsmaschine (1) nach einem der vorhergehenden Ansprüche, wobei die erste Siegelbacke (11) und die zweite Siegelbacke (11) das Verpackungsmaterial (3) entlang einer gesamten Breite (w) sowohl der ersten Siegelbacke (11) als auch der zweiten Siegelbacke (12) erfassen.

4. Verpackungsmaschine (1) nach einem der vorhergehenden Ansprüche, wobei die erste Siegelbacke (11) und die zweite Siegelbacke (12) eines der folgenden Merkmale aufweisen:
erwärmt zum Heißsiegeln des Verpackungsmaterials (3); oder
angeordnet zum Kaltsiegeln des Verpackungsmaterials (3).

5. Verpackungsmaschine (1) nach einem der vorhergehenden Ansprüche, wobei die abgewinkelte oder gekrümmte Oberfläche (18) der ersten Siegelbacke (11) und die abgewinkelte oder gekrümmte Oberfläche (19) der zweiten Siegelbacke (12) jeweils Rippen (27, 35) aufweisen, die komplementär zueinander geformt sind.

6. Verpackungsmaschine (1) nach Anspruch 5, wobei sich die Rippen (27, 35) über eine gesamte Breite (w) der ersten Siegelbacke (11) und der zweiten Siegelbacke (12) erstrecken.

7. Verpackungsmaschine (1) nach einem der vorhergehenden Ansprüche, wobei mindestens eine von der ersten und der zweiten Siegelbacke (11, 12) durch einen Pneumatikzylinder (13) bewegbar ist.

8. Verpackungsmaschine (1) nach einem der vorhergehenden Ansprüche, umfassend ein Schneidwerkzeug (17), das in der ersten Siegelbacke (11) angeordnet ist und dazu betätigt werden kann, das Verpackungsmaterial (3) zu schneiden, wenn die Siegelbacken (11, 12) aufeinander zu bewegt wurden und das Verpackungsmaterial (3) fixieren, um das Verpackungsmaterial (3) zu erfassen und zu versiegeln.

9. Verpackungsmaschine (1) nach Anspruch 8, wobei die abgewinkelte oder gekrümmte Oberfläche (18) der ersten Siegelbacke (11) zwei in einem Abstand zueinander angeordnete und zum Schneidwerkzeug (17) hin konkav abgewinkelte oder gekrümmte Flächen (20, 21) umfasst.

10. Verpackungsmaschine (1) nach Anspruch 9, wobei die abgewinkelte oder gekrümmte Oberfläche (19) der zweiten Siegelbacke (12) zwei Flächen (28, 29) umfasst, die in einem Abstand zueinander angeordnet sind und so dazwischen einen Schlitz (30) zur Aufnahme des Schneidwerkzeugs (17) definieren, wobei die zwei Flächen (28, 29) der zweiten Siegelbacke (12) zur ersten Siegelbacke (11) hin konvex abgewinkelt oder gekrümmt sind.

11. Verpackungsmaschine (1) nach einem der vorhergehenden Ansprüche, umfassend ein Gehäuse (16), aus dem die erste Siegelbacke (11) vorsteht, und eine Anordnung (14) elektrischer Drähte, die zwischen einer Wärmequelle (15) und dem Gehäuse (16) verbunden ist.

12. Verpackungsmaschine (1) nach einem der vorhergehenden Ansprüche, wobei die abgewinkelten oder gekrümmten Oberflächen (18, 19) der Siegelbacken (11, 12) eine Länge (L_{S}) des Verpackungsmaterials (3) um mindestens 1 % oder um einen Betrag zwischen 1 % und 30 % dehnen.

13. Verfahren (60) zum Herstellen von umhüllten Speiseeisprodukten (7) unter Verwendung einer Verpackungsmaschine (1), wobei das Verfahren umfasst:
Aufnehmen (61) eines Verpackungsmaterials (3) und eines Speiseeisprodukts (4) unter Verwendung eines Vorschubmechanismus (2), der dazu angeordnet ist, das Verpackungsmaterial (3) und das Speiseeisprodukt (4) in einer vorbestimmten Richtung (D1) relativ zu und zwischen Siegelbacken (11, 12) zu bewegen;
Bewegen (62) der Siegelbacken (11, 12) aufeinander zu, um das Verpackungsmaterial (3) zu erfassen und zu versiegeln, zu dem Zweck, das Speiseeisprodukt (4) im Inneren des Verpackungsmaterials (3) einzuschließen; **gekennzeichnet durch**
Dehnen (63) des Verpackungsmaterials (3) über abgewinkelte oder gekrümmte Oberflächen (18, 19) der Siegelbacken (11, 12), die relativ zur vorbestimmten Richtung (D1) abgewinkelt oder gekrümmt sind, um einen Abstand von mindestens 1,0 Millimeter relativ zur vorbestimmten Richtung (D1), wenn die Siegelbacken (11, 12) aufeinander zu bewegt werden, um das Verpackungsmaterial (3) zu erfassen und zu versiegeln, wobei die abgewinkelten oder gekrümmten Oberflächen (18, 19) der Siegelbacken (11, 12) in ihrer Form relativ zueinander komplementär sind.

## Revendications

1. Machine de conditionnement (1) configurée pour recevoir un matériau d'emballage (3) et un produit de crème glacée (4) afin de produire des produits de crème glacée emballés (7), la machine de conditionnement (1) comprenant une première mâchoire de scellement (11), une deuxième mâchoire de scellement (12) et un mécanisme d'alimentation (2) agencé pour déplacer le matériau d'emballage (3) et le produit de crème glacée (4) dans une direction prédéterminée (D1) relativement aux mâchoires de scellement (11, 12) et entre celles-ci, les mâchoires de scellement (11, 12) pouvant être déplacées l'une vers l'autre pour se mettre en prise avec et sceller le matériau d'emballage (3) afin d'enfermer le produit de crème glacée (4) à l'intérieur du matériau d'emballage (3),
la première mâchoire de scellement (11) ayant une surface (18) en angle ou incurvée relativement à la direction prédéterminée (D1) ; et
la deuxième mâchoire de scellement (12) ayant une surface (19) qui est en angle ou incurvée relativement à la direction prédéterminée (D1) et de forme complémentaire à la surface en angle ou incurvée (12) de la première mâchoire de scellement (11), de telle sorte que les mâchoires de scellement (11, 12) étirent le matériau d'emballage (3) par-dessus les surfaces en angle ou incurvées (18, 19) lorsque les mâchoires de scellement (11, 12) sont déplacées l'une vers l'autre pour se mettre en prise avec et sceller le matériau d'emballage (3), **caractérisée en ce que** les surfaces en angle ou incurvées (18, 19) des mâchoires de scellement (11, 12) sont en angle ou incurvées de telle sorte qu'elles étirent le matériau d'emballage (3) d'une distance d'au moins 1,0 millimètre relativement à la direction prédéterminée (D1), lorsque les mâchoires de scellement (11, 12) sont déplacées l'une vers l'autre pour se mettre en prise avec et sceller le matériau d'emballage (3).

2. Machine de conditionnement (1) selon la revendication 1, dans laquelle la surface en angle ou incurvée (18) de la première mâchoire de scellement (11) a une forme concave et la surface en angle ou incurvée (19) de la deuxième mâchoire de scellement (12) a une forme convexe.

3. Machine de conditionnement (1) selon n'importe quelle revendication précédente, dans laquelle la première mâchoire de scellement (11) et la deuxième mâchoire de scellement (11) se mettent en prise avec le matériau d'emballage (3) le long d'une largeur (w) entière à la fois de la première mâchoire de scellement (11) et de la deuxième mâchoire de scellement (12).

4. Machine de conditionnement (1) selon n'importe quelle revendication précédente, dans laquelle la première mâchoire de scellement (11) et la deuxième mâchoire de scellement (12) sont :
soit chauffées pour thermosceller le matériau d'emballage (3) ;
soit agencées pour sceller à froid le matériau d'emballage (3).

5. Machine de conditionnement (1) selon n'importe quelle revendication précédente, dans laquelle la surface en angle ou incurvée (18) de la première mâchoire de scellement (11) et la surface en angle ou incurvée (19) de la deuxième mâchoire de scellement (12) ont chacune des arêtes (27, 35) qui sont de forme complémentaire l'une relativement à l'autre.

6. Machine de conditionnement (1) selon la revendication 5, dans laquelle les arêtes (27, 35) s'étendent sur une largeur (w) entière de la première mâchoire de scellement (11) et de la deuxième mâchoire de scellement (12).

7. Machine de conditionnement (1) selon n'importe quelle revendication précédente, dans laquelle au moins l'une des première et deuxième mâchoires de scellement (11, 12) peut être déplacée par un cylindre pneumatique (13) .

8. Machine de conditionnement (1) selon n'importe quelle revendication précédente, comprenant un outil de coupe (17) qui est agencé dans la première mâchoire de scellement (11) et peut être actionné pour couper le matériau d'emballage (3) lorsque les mâchoires de scellement (11, 12) ont été déplacées l'une vers l'autre et fixent le matériau d'emballage (3) pour se mettre en prise avec et sceller le matériau d'emballage (3) .

9. Machine de conditionnement (1) selon la revendication 8, dans laquelle la surface en angle ou incurvée (18) de la première mâchoire de scellement (11) comprend deux surfaces (20, 21) qui sont agencées à une certaine distance l'une de l'autre et en angle ou incurvées de façon concave vers l'outil de coupe (17).

10. Machine de conditionnement (1) selon la revendication 9, dans laquelle la surface en angle ou incurvée (19) de la deuxième mâchoire de scellement (12) comprend deux surfaces (28, 29) qui sont agencées à une certaine distance l'une de l'autre pour définir une fente (30) entre elles pour recevoir l'outil de coupe (17), les deux surfaces (28, 29) de la deuxième mâchoire de scellement (12) étant en angle ou incurvées de façon convexe vers la première mâchoire de scellement (11).

11. Machine de conditionnement (1) selon n'importe quelle revendication précédente, comprenant un logement (16) à partir duquel la première mâchoire de scellement (11) fait saillie, et un assemblage de fils électriques (14) qui est connecté entre une source de chaleur (15) et le logement (16).

12. Machine de conditionnement (1) selon n'importe quelle revendication précédente, dans laquelle les surfaces en angle ou incurvées (18, 19) des mâchoires de scellement (11, 12) étirent une longueur (L_{S}) du matériau d'emballage (3) d'au moins 1 %, ou d'une quantité qui est comprise entre 1 % et 30 %.

13. Procédé (60) pour produire des produits de crème glacée emballés (7) à l'aide d'une machine de conditionnement (1), le procédé comprenant :
la réception (61) d'un matériau d'emballage (3) et d'un produit de crème glacée (4) à l'aide d'un mécanisme d'alimentation (2) agencé pour déplacer le matériau d'emballage (3) et le produit de crème glacée (4) dans une direction prédéterminée (D1) relativement à et entre des mâchoires de scellement (11, 12) ;
le déplacement (62) des mâchoires de scellement (11, 12) l'une vers l'autre pour se mettre en prise et sceller le matériau d'emballage (3) afin d'enfermer le produit de crème glacée (4) à l'intérieur du matériau d'emballage (3) ; **caractérisé par**
l'étirage (63) du matériau d'emballage (3) par-dessus des surfaces en angle ou incurvées (18, 19) des mâchoires de scellement (11, 12) qui sont en angle ou incurvées relativement à la direction prédéterminée (D1), d'une distance d'au moins 1,0 millimètre relativement à la direction prédéterminée (D1), lorsque les mâchoires de scellement (11, 12) sont déplacées l'une vers l'autre pour se mettre en prise avec et sceller le matériau d'emballage (3), les surfaces en angle ou incurvées (18, 19) des mâchoires de scellement (11, 12) étant de forme complémentaire l'une relativement à l'autre.
